# EUROPÄISCHE PATENTSCHRIFT

(11) **EP 2 440 480 B1**
(45) Veröffentlichungstag und Bekanntmachung des Hinweises auf die Patenterteilung: **02.10.2013**
(21) Anmeldenummer: 10735089.4
(22) Anmeldetag: 07.06.2010
(51) Int. Cl.: B65G 19/18, E21F 13/06

(54) **OBERTRUMWANNE FÜR EINEN RINNENSCHUSS UND RINNENSCHUSS HIERMIT**
UPPER-STRAND WELL FOR A TROUGH PAN AND TROUGH PAN HAVING SUCH AN UPPER-STRAND WELL
AUGE DE BRIN SUPÉRIEUR POUR UN BAC DE GOUTTIÈRE ET BAC DE GOUTTIÈRE ÉQUIPÉ DE CETTE DERNIÈRE

(30) Priorität: 10.06.2009 DE 202009004911 U
(43) Veröffentlichungstag der Anmeldung: 18.04.2012
(73) Patentinhaber: Caterpillar Global Mining Europe GmbH, 44534 Lünen (DE)
(72) Erfinder: INGENDAHL, Jürgen, 42929 Wermelskirchen (DE)
(74) Vertreter: Althaus, Arndt
(86) Internationale Anmeldenummer: PCT/IB2010/052521
(87) Internationale Veröffentlichungsnummer: WO 2010/143123

(56) Entgegenhaltungen:
- EP-A2- 1 362 807
- DE-A1- 3 405 986
- DE-A1- 3 903 347
- DE-A1- 10 050 701
- DE-C1- 19 844 052
- DE-U1- 9 313 677
- DE-U1-202005 004 383
- GB-A- 2 163 398

## Beschreibung

Die Erfindung betrifft eine Obertrumwanne für einen Rinnenschuss eines Kettenkratzförderers nach dem Oberbegriff des Anspruchs 1, insbesondere eines Strebförderers für den Bergbaueinsatz, mit zwei Seitenprofilen und mit einem diese Seitenprofile verbindenden Wannenboden, der zwei Seitenkanten, zu denen die Seitenprofile im Wesentlichen parallel ausgerichtet verlaufen, und zwei Stirnkanten aufweist, die zueinander komplementär ausgebildet sind, die zumindest partiell eine gewellte Begrenzungslinie aufweisen und die am Übergang einer Deckseite des Wannenbodens in die Stirnkante mit einer Anfasung mit einem Fasenwinkel versehen sind. Der Anspruch 7 betrifft ferner einen Rinnenschuss für Kettenkratzförderer, mit einer Obertrumwanne nach Anspruch 1.

Eine gattungsgemäße Obertrumwanne für einen Rinnenschuss ist aus der DE 102 22 598 A1 bekannt. Durch die Wellenkontur der Begrenzungslinie der Stirnkante des Wannenbodens einerseits und einen zugehörigen wellenförmigen und vorzugsweise versetzten Verlauf des Zwischenbodens andererseits wird nicht nur ein gleichmäßiges Überlaufen des Stoßbereichs mit den im Obertrum geführten Kratzer erreicht, sondern gleichzeitig sichergestellt, dass eine ausreichende Winkelbeweglichkeit selbst dann gewährleistet ist, wenn zwei benachbarte Rinnenschüsse um die maximal durch Rinnenschussverbindungsmittel wie insbesondere Knebel zugelassenen Abwinklungen versetzt zueinander stehen.

Bei längerem Betriebseinsatz einer sich auf einem Zwischenboden abstützenden auswechselbaren Obertrumwanne zeigen sich manchmal erhebliche Ansammlungen von Feinkohle im Spalt an der Stoßstelle zwischen den Wannenblechen benachbarter Obertrumwannen, wobei sich diese Feinkohle durch die Bewegung der Kratzer zusätzlich verdichten kann und in ungünstigen Fällen auch zwischen Wannenboden und Zwischenboden gelangen kann. In einigen seltenen Fällen ist bereits beobachtet worden, dass das Nachwandern von Feinkohle im Stoßspalt zwischen benachbarten Wannenböden ein Anheben der Obertrumwannen relativ zum Zwischenboden bewirkt, wodurch die Kräfte auf Arretiereinrichtungen für die Obertrumwannen erheblich zunehmen und ferner ein Lösen der Obertrumwanne zu Inspektions- oder Reparaturzwecken erheblich erschwert wird. Zur Minderung dieses Problems ist bereits vorgeschlagen worden, im Zwischenboden Feinkohledurchtritte vorzusehen, damit Feinkohle, sofern sie sich zwischen Wannenboden und Zwischenboden ansammelt, durch die Löcher nach unten in den Untertrum fallen kann.

Aus der DE 198 44 052 C1 ist eine Führungsanordnung für eine Walzenschrämmaschine bekannt, bei welcher ein Führungsschuh mit an seiner Unterseite offenen Feinkohleableitöffnungen versehen ist, um zu verhindern, dass sich Feinkohle in der Aufnahmetasche ansammelt.

Aus der DE 34 05 986 A1 ist ein Rinnenschuss für einen Kettenkratzförderer mit einer Inspektionsöffnung in der Obertrumtwanne bekannt, wobei die Inspektionsöffnung mittels eines Einsatzbleches geschlossen wird. Die Stoßkanten zwischen Einsatzblech einerseits und Bodenblech der Obertrumwanne andererseits können abgeschrägt oder abgestuft ausgebildet sein, um eine verbesserte Auflage des Einsatzbleches mit dessen Stoßkanten am fest mit dem Rinnenschuss verankerten Bodenblech zu erzielen.

Aufgabe der Erfindung ist es, Obertrumwannen und hiermit ausgestattete Rinnenschüsse derart zu verbessern, dass das Problem des Eindringens von Feinkohle in den Zwischenspalt des Auflagebereichs zwischen Wannenboden und Zwischenboden möglichst vermieden wird und insofern die bekannten Probleme nicht mehr auftreten können.

Diese Aufgabe wird erfindungsgemäß mit einer Obertrumwanne mit den Merkmalen des Anspruchs 1 gelöst, wobei die Stirnkanten der Wannenböden zwischen der Anfasung und einer Unterseite der Obertrumwanne mit einer Anschrägung mit einem Schrägenwinkel versehen sind, wobei die Anschrägung steiler verläuft als die Anfasung. Durch die zusätzliche Anschrägung der jeweiligen Stirnkante der Wannenböden und den steileren Verlauf dieser Anschrägung wird ein nach oben gerichteter Öffnungswinkel am Stoßspalt zwischen benachbarten Rinnenschüssen erreicht, der in überraschender Weise einen Selbstreinigungseffekt für den Stoßspalt schafft, da durch die zusätzliche Anschrägung Feinkohle stärker dazu tendiert, aus dem Spalt herauszuwandern, als im Spalt weiter nach unten und anschließend in den Zwischenspalt zwischen Wannenboden und Zwischenboden zu geraten. Dieser überraschende Selbstreinigungseffekt wird auch durch die Mitnahmewirkung der vorbeilaufenden Kratzer unterstützt, da diese einen schmalen, sich nach unten verjüngenden Feinkohlekeil leichter aus dem erfindungsgemäß erzeugten Stoßspalt herausreißen können als eine sich nicht verjüngende oder nur im Bereich der Anfasung verjüngende Feinkohleansammlung.

Gemäß einer vorteilhaften Ausgestaltung kann sich die Anschrägung bis zur Unterseite des Wannenbodens erstrecken. Diese Maßnahme wird in besonders vorteilhafter Weise bei neu herzustellenden Obertrumwannen vorgesehen, bei denen die exakten Abmessungen des Wannenbodens vor dem Anfertigen der Anfasung und Anschrägung feststehen. Alternativ kann sich die Anschrägung nur partiell über die Tiefe der Stirnkante erstrecken und zwischen Unterseite des Wannenbodens und einer Grenzkante der Anschrägung ist ein rechtwinklig zur Unterseite verlaufender Geradkantenabschnitt ausgebildet. Die Tiefe des Geradkantenabschnitts kann, bezogen auf die Blechdicke des Wannenbodens, bei etwa 1/10 bis 1/20 der Ausgangsdicke des Wannenbodens liegen und beispielsweise etwa 1 bis 4 mm, je nach Ausgangsdicke des Wannenbodens, betragen. Eine Ausgestaltung der Stirnkante mit Anfasung, Anschrägung und einem schmalen Geradkantenabschnitt bietet sich insbesondere bei der Instandsetzung bereits im Einsatz befindlicher Wechseltröge als Obertrumwannen an, bei denen die Stirnkanten aufgrund des permanenten Überlaufs der Kratzer ohnehin schon Abnutzungserscheinungen zeigen und insofern nicht sichergestellt werden kann, dass eine gleichbleibende Anschrägung bis zur Unterseite des Wannenbodens im Nachhinein vorgesehen, insbesondere ausgebrannt werden kann.

Die Anschrägung und die Anfasung sind an beiden entgegengesetzten Stirnkanten eines Wannenbodens vorzugsweise gleich ausgebildet und gleich groß ausgebildet. Im untertägigen Betriebseinsatz kann allerdings der Fall auftreten, dass zum Einen eine neue Obertrumwanne und zum Anderen eine instandgesetzte Obertrumwanne mit ihren Stirnkanten unmittelbar aneinanderstoßen. In einem solchen Fall könnte dann eine bis zur Unterseite durchgehende Anschrägung einer Anschrägung mit Geradkantenabschnitt gegenüberliegen.

Die Begrenzungslinie an den Stirnkanten ist vorzugsweise mit einer mittigen, gewölbten Zone und außenseitig mit mehrfach abgewinkelten Zonen versehen, um eine gute Winkelbeweglichkeit benachbarter Rinnenschüsse bzw. Obertrumwannen zueinander zu gewährleisten.

Bei einem Rinnenschuss können zusätzlich zu den an der Obertrumwanne getroffenen erfindungsgemäßen Maßnahmen noch weitere konstruktive Veränderungen vorgenommen werden, um die Standzeit des Rinnenschusses insgesamt zu verbessern. So kann gemäß einer vorteilhaften Ausgestaltung der Zwischenboden nahe seiner Endkanten partiell mit Aussparungen oder Löchern versehen sein, wie dies an sich schon erprobt wurde, wobei allerdings über die dann noch vorgesehenen Aussparungen oder Löcher wesentlich weniger Feinkohle in den Untertrum abgeführt werden muss als im Stand der Technik, da das Gros des sich im Spalt ansammelnden Feinkohlematerials durch den Selbstreinigungseffekt aus dem Stoßspalt nach oben herauswandert. Die Aussparungen bestehen vorzugsweise aus ovalen, quer zur Laufrichtung der Kratzer bzw. annähernd parallel zur Stirnkante angeordneten Langlöchern. Weiter vorzugsweise kann der Zwischenboden einseitig mit einer bis zur Endkante reichenden Abflachung versehen sein, über die insbesondere die Abwinklung zweier benachbarter Rinnenschüsse in Mulden verbessert wird, da dann ein geringeres Risiko besteht, dass der Wannenboden des einen Rinnenschusses auf dem Zwischenboden des nachfolgenden Rinnenschusses aufliegt. Bei dieser Ausgestaltung ist insbesondere vorteilhaft, wenn die Aussparungen oder Löcher nur in dem sich an die Abflachung anschließenden Teilabschnitt des Zwischenbodens ausgebildet sind und/ oder wenn im Teilabschnitt hinter der Abflachung die Anzahl der Löcher oder Aussparungen größer ist als nahe der anderen Endkante des Zwischenbodens ohne Abflachung. Ferner kann, wie an sich bekannt, der Zwischenboden mit einer Revisionsöffnung versehen sein, und unterhalb des Wannenbodens ist ein Blechstück angeschweißt, welches im Montagezustand in die Revisionsöffnung formschlüssig einfasst, um die einen Wechseltrog bildende Obertrumwanne formschlüssig durch das Zusammenspiel von Blechstück und Revisionsöffnung in Bewegungsrichtung der Kratzer zu arretieren und die zusätzlich vorgesehenen Arretiermittel wie Arretiernasen an den Seitenkanten der Obertrumwanne zu entlasten.

Weitere Vorteile und Ausgestaltungen einer erfindungsgemäßen Obertrumwanne und eines vorteilhaften Rinnenschusses ergeben sich aus der nachfolgenden Beschreibung von schematisch in der Zeichnung gezeigten Ausführungsbeispielen. In der Zeichnung zeigen:

Fig. 1 zwei Rinnenschüsse mit angebauter Hobelführung in Draufsicht, teilweise aufgebrochen;

Fig. 2 eine Schnittansicht entlang II-II in Fig. 1;

Fig. 3 perspektivisch den Stoßbereich zwischen zwei benachbarten Rinnenschüssen, teilweise aufgebrochen;

Fig. 4 die beiden Rinnenschüsse aus Fig. 1 in Schnittansicht entlang IV-IV in Fig. 1;

Fig. 5 den Stoßspalt zwischen zwei benachbart liegenden Wannenböden gemäß einem ersten Ausführungsbeispiel;

Fig. 6 den Stoßspalt zwischen benachbarten Wannenböden gemäß einem zweiten Ausführungsbeispiels; und

Fig. 7 den Stoßspalt zwischen einer neuen und einer instandgesetzten Obertrumwanne.

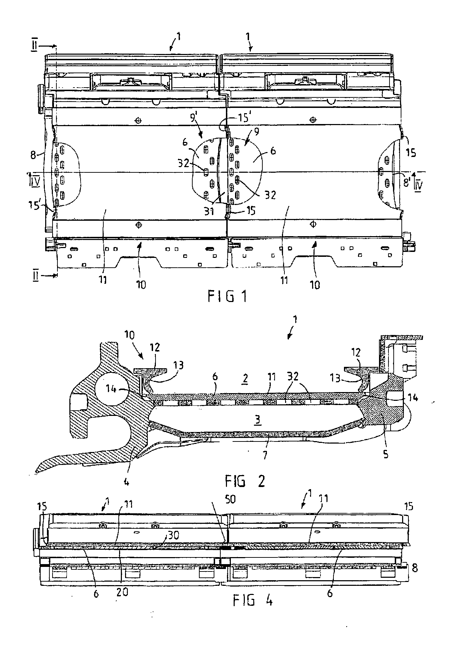

In den Fig. 1 bis 4 ist jeweils mit Bezugszeichen 1 ein Rinnenschuss bezeichnet. Ein Kettenkratzförderer, wie er beispielsweise im untertätigen Gewinnungsstreb einer Kohlengewinnungsanlage verlegt wird, besteht meist aus einer Vielzahl von beispielsweise mehr als 200 identisch aufgebauter Rinnenschüsse 1, an deren Ende dann noch Antriebsrinnen positioniert werden, um ein umlaufendes Kratzerband mit angeschlossenen Kratzer (nicht dargestellt) in einem Obertrum 2 der einzelnen Rinnenschüsse 1 in die eine Richtung zu bewegen und im Untertrum 3 umlaufend zurückzuführen. Der Rinnenschuss 1 besteht, wie insbesondere Fig. 2 gut entnommen werden kann, im gezeigten Ausführungsbeispiel aus einer ersten, hier zugleich integral eine Hobelführung aufweisenden Seitenwange 4, die als kompliziertes Gussteil aufgebaut ist, und einer gegenüber dieser erheblich reduzierten zweiten, im Betriebseinsatz versatzseitig positionierten Seitenwange 5, wobei die beiden Seitenwangen 4, 5 im Wesentlichen starr über einerseits einen Zwischenboden 6 und andererseits einen Untertrumboden 7 miteinander verbunden sind. Das gezeigte Ausführungsbeispiel für die beiden Seitenwangen 4, 5 und die Positionierung und Anordnung von Zwischenboden 6 und Untertrumboden 7 ist nur beispielhaft für einen Rinnenschuss und die einzelnen Teile könnten grundsätzlich anders aufgebaut sein oder, wie z.B. der Untertrumboden 7, je nach Aufbau und Einsatzzweck eines Rinnenschusses auch entfallen.

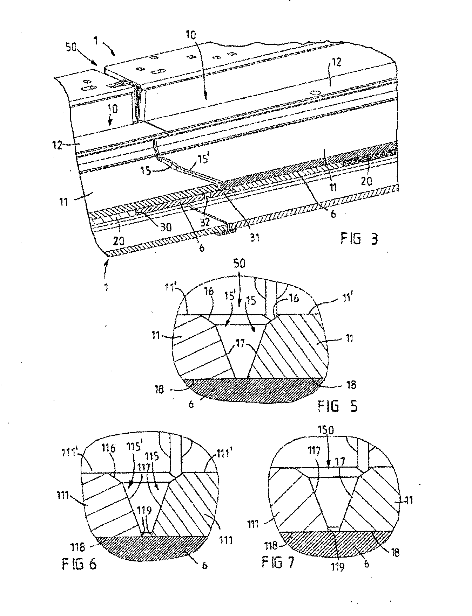

Auf dem die Seitenwangen 4, 5 verbindenden Zwischenboden 6 stützt sich eine Obertrumwanne 10 ab, die in an sich bekannter Weise aus einem ebenen Wannenboden 11 sowie zwei Seitenprofilen 12 besteht, die einander zugewandt eine Profilkontur 13 aufweisen, an der sich die nicht gezeigten Kratzer mit ihren Kratzerenden führen können. Jede Obertrumwanne (Wechseltrog) 10 weist zwei Seitenkanten (14, Fig. 2) auf, die im Wesentlichen parallel zu den Seitenprofilen 12 verlaufen, und ferner zwei entgegengesetzt liegende Stirnkanten 15, 15' auf, die beide, wie insbesondere die Draufsicht in Fig. 1 zeigt, eine wellenförmige Begrenzungslinie aufweisen, wobei die Stirnkanten 15 und 15' komplementär zueinander ausgebildet sind, damit im Montagezustand eine Ausbuchtung z.B. an der Stirnkante 15 in eine Einbuchtung an der Stirnkante 15' einfasst und umgekehrt. Jeweils zwischen den beiden Wannenböden 11 der Obertrumwannen 10 benachbarter Rinnenschüsse 1 entsteht ein Stoßbereich oder Stoßspalt 50, der aufgrund des wellenförmigen Verlaufs der Stirnkanten 15, 15' von Kratzern der Kratzerkette überlaufen werden kann, ohne dass die Kratzer im Stoßbereich gegen die Stirnkanten anschlagen. Für eine ausreichende Stoßspalt-überdeckung bei jedem Rinnenschuss 1 springt die Endkante 8 des Zwischenbodens 6 auf der einen Seite weiter vor als die darüberliegende Stirnkante 15' des Wannenbodens 11, während am gegenüberliegenden Ende des Rinnenschuss 1 die entsprechende Endkante 8' nach innen versetzt (zurückversetzt) liegt, was besonders gut aus Fig. 4 ersichtlich ist. Um die Winkelbeweglichkeit sicherzustellen, haben auch die Endkanten 8, 8' des Zwischenbodens eine wellenförmige Begrenzungslinie, wobei die Wellenkontur ähnlich oder identisch sein kann wie die Wellenkontur der Stirnkanten 15, 15' der Wannenböden 11 und vorzugsweise eine mittige, gewölbte Zone und randseitig mehrfach abgewinkelte Zonen aufweist, wie die Fig. 1 und 3 gut erkennen lassen.

Erfindungsgemäß weisen beide Stirnkanten 15, 15' der Wannenböden 11 zusätzlich zu einer Anfasung 16 am Übergang der Oberseite 11' in die Stirnkante 15 eine Anschrägung 17 auf, die sich, wie im Detail in Fig. 5 dargestellt, gemäß einer insbesondere vorteilhaften Ausgestaltung bei neuhergestellten Obertrumwannen 10 durchgehend als Schräge bis zur Unterseite 18 des Wannenbodens 11 erstreckt. Im gesamten Stoßspalt 50 zwischen den beiden Wannenböden 11 ist mithin ein sich nach oben öffnender V-förmiger Spalt ausgebildet, der zugleich bis zum Zwischenboden 6 des Rinnenschusses, mithin bis zur Überlappungszone hinabreicht. Die Anfasung 16 hat hier einen Fasenwinkel, der relativ zur Oberseite 11' des Wannenbodens 11 um einen Winkel von 45° abgewinkelt verläuft und im Allgemeinen zwischen etwa 25° und 50° liegen kann. Bezogen auf die Gesamtdicke des Wannenbodens 11 von hier etwa 40 mm erstreckt sich die Anfasung 16 über eine Tiefe von hier 5mm. An die Anfasung 16 schließt sich unmittelbar die Anschrägung 17 mit einem Schrägenwinkel an, der größer, insbesondere deutlich größer ist als der Fasenwinkel und einen wesentlich steileren Verlauf der Anschrägung 17 als die Anfasung 16 bewirkt. Bei der insbesondere bevorzugten Ausgestaltung liegt der Schrägenwinkel der Anschrägung 17 bei 70° relativ zur Oberseite 11' und erstreckt sich mit gleichbleibendem Schrägenwinkel bis zur Unterseite 18.

Fig. 6 zeigt ein alternatives Ausführungsbeispiel mit Wannenböden 111 mit einer Anfasung 116 mit denselben Abmessungen wie beim vorherigen Ausführungsbeispiel sowie einer Anschrägung 117, die sich nicht bis zur Unterseite 118 der Wannenböden 111 erstreckt, sondern die von der Unterseite 118 um hier etwa 2 mm beabstandet endet, da sich zwischen Unterseite 118 und Anschrägung 117 noch ein Geradkantenabschnitt 119 befindet, an welchem die Stirnkanten 115' bzw. 115 senkrecht zur Oberseite 111' bzw. Unterseite 118 der Wannenböden 111 verlaufen. Eine solche Ausgestaltung bietet sich insbesondere an, wenn Obertrumwannen nach vorherigem Gebrauch repariert werden.

Die Fig. 7 zeigt einen Rinnenstoßspalt 150 zwischen einem Wannenboden 111 gemäß Fig. 6 und einem Wannenboden 11 gemäß Fig. 5. Die eine Anschrägung 17 verläuft mithin gradlinig bis zur Unterseite 18 während die andere Anschrägung 117 zuerst in einen Geradkantenabschnitt 119 übergeht.

Aus den Fig. 1 und 3 ist ferner ersichtlich, dass der Zwischenboden 6 jeweils nahe der Endkanten mit Reihen 9 bzw. 9' von hier länglichen und quer zur Laufrichtung der Kratzer sich erstreckenden ovalen Langlöchern 32 ausgebildet ist. Die Dichte der Langlöcher 32 in der Reihe 9 an derjenigen Endkante 8 des Zwischenbodens 6, die im Montagezustand von dem darüberliegenden Wannenboden 11 überdeckt wird, ist höher als die Dichte in der Reihe 9', die an der zurückversetzt liegenden Endkante 8' des Zwischenbodens 6 liegt. Zwischen der Reihe 9 von Langlöchern 32 mit höherer Anzahl und der zugehörigen Endkante 8 ist eine Abflachung 31 ausgebildet, wie Fig. 3 besonders deutlich zeigt, die den Zwischenboden 6 zur Endkante 8 hin geringfügig verjüngt, um die Winkelbeweglichkeit in der Vertikalen zu verbessern. Da durch die Abflachung 31 das Risiko einer Ansammlung von Feinkohle im Zwischenspalt zunimmt, dient die höhere Anzahl von Langlöchern 32, die im Prinzip parallel zur Endkante 8 verlaufen, in der Reihe 9 zugleich als Barriere für die Feinkohle, die den Zwischenspalt nicht weiter unterwandern kann. Ferner kann Fig. 3 gut entnommen werden, dass an der Unterseite der einzelnen Wannenböden 11 jeweils Blechstücke 20 angeschweißt sind, die im Montagezustand in Inspektionsöffnungen 30 in den Zwischenböden 6 formschlüssig einfassen, um die Wannenböden 11 und hiermit den gesamten Wechseltrog 10 an der mittels der Seitenwangen 4, 5 und dem Zwischenboden 6 gebildeten Unterkonstruktion in Bewegungsrichtung der Kratzer zu verankern.

Für den Fachmann ergeben sich aus der vorhergehenden Beschreibung zahlreiche Modifikationen, die in den Schutzbereich der anhängenden Ansprüche fallen sollen. Die Ausführungsbeispiele zeigen eine Anfasung mit einem Winkel von 45° bei einer Tiefe von 5mm. Je nach Blechdicke kann sowohl die Tiefe der Anfasung als auch der Fasenwinkel in Grenzen variieren. Gleiches gilt auch für den Schrägenwinkel, der nur vorzugsweise bei etwa 70° liegt. Anstelle eines gradlinigen Verlaufs der Anschrägung könnte auch ein leicht gewölbter oder ein gegebenenfalls mehrfach abgewinkelter Verlauf der Anschrägung vorgesehen sein, wobei vorzugsweise die Steilheit der Anschrägung jeweils zur Unterseite hin zunimmt. Die Seitenwangen können aus Gussteilen, Platten, Schweißkonstruktion und dgl. bestehen und mit oder ohne Führung für Gewinnungsmaschinen ausgeführt sein.

## Patentansprüche

1. Obertrumwanne (10) für einen Rinnenschuss eines Kettenkratzförderers, mit zwei Seitenprofilen (12) und mit einem diese verbindenden Wannenboden (11), der zwei Seitenkanten (14) und zwei Stirnkanten (15, 15') aufweist, die zueinander komplementär ausgebildet sind, die zumindest partiell eine gewellte Begrenzungslinie aufweisen und die am Übergang einer Deckseite (11'; 111') in die Stirnkante (15, 15'; 115, 115') mit einer Anfasung (16; 116) mit einem Fasenwinkel versehen sind, **dadurch gekennzeichnet, dass** die Stirnkanten (15, 15'; 115, 115') zwischen der Anfasung (16, 116) und einer Unterseite (18; 118) mit einer Anschrägung (17; 117) versehen sind, wobei die Anschrägung (17; 117) steiler verläuft als die Anfasung (16; 116).

2. Obertrumwanne nach Anspruch 1, **dadurch gekennzeichnet, dass** sich die Anschrägung (17) bis zur Unterseite (18) des Wannenbodens (11) erstreckt.

3. Obertrumwanne nach Anspruch 1, **dadurch gekennzeichnet, dass** sich die Anschrägung (117) nur partiell über die Tiefe der Stirnkante (115) erstreckt und zwischen Unterseite (118) und Grenzkante der Anschrägung (117) ein rechtwinklig zur Unterseite (118) verlaufender Geradkantenabschnitt (119) ausgebildet ist.

4. Obertrumwanne nach einem der Ansprüche 1 bis 3, **dadurch gekennzeichnet, dass** der Fasenwinkel zwischen etwa 25° und 50 ° liegt und/oder insbesondere etwa 30° oder 45° beträgt und/oder dass der Schrägenwinkel etwa 60° bis 80°, insbesondere etwa 70° beträgt.

5. Obertrumwanne nach einem der Ansprüche 1 bis 4, **dadurch gekennzeichnet, dass** die Anschrägung (17; 117) und die Anfasung (16; 116) an beiden entgegengesetzten Stirnkanten (15, 15'; 115, 115') eines Wannenbodens (11; 111) gleich groß sind.

6. Obertrumwanne nach einem der Ansprüche 1 bis 5, **dadurch gekennzeichnet, dass** die Begrenzungslinie eine mittige, gewölbte Zone hat und randseitig mit mehrfach abgewinkelten Zonen versehen ist.

7. Rinnenschuss für Kettenkratzförderer, insbesondere für Strebförderer für den Bergbaueinsatz, mit einer Obertrumwanne (10) nach einem der Ansprüche 1 bis 6, und mit einer Stützkonstruktion für die Obertrumwanne (10), die miteinander verbundene und einen Untertrum (3) begrenzende Seitenwangen (4; 5) umfasst, die über einen Zwischenboden (6) verbunden sind, der eine Auflagefläche für den Wannenboden (11) der Obertrumwanne (10) bildet und Endkanten (8) aufweist, die im Montagezustand versetzt zu den Stirnkanten (15, 15') des Wannenbodens (11) liegen, um Überlappungsbereiche im Stoßbereich zweier benachbarter Rinnenschüsse (1) zu schaffen

8. Rinnenschuss nach Anspruch 7, **dadurch gekennzeichnet, dass** der Zwischenboden (6) nahe der Endkanten (8; 8') partiell mit Aussparungen oder Löchern (32) versehen ist.

9. Rinnenschuss nach Anspruch 8, **dadurch gekennzeichnet, dass** der Zwischenboden (6) einseitig mit einer bis zur Endkante (8) reichenden Abflachung (31) versehen ist, wobei die Aussparungen oder Löcher (32) in dem sich an die Abflachung (31) anschließenden Teilabschnitt des Zwischenbodens (6) ausgebildet sind.

10. Rinnenschuss nach einem der Ansprüche 7 bis 9, **dadurch gekennzeichnet, dass** im Teilabschnitt die Anzahl der Löcher oder Aussparungen (32) größer ist als nahe der anderen Endkante (8') des Zwischenbodens (6).

11. Rinnenschuss nach einem der Ansprüche 7 bis 10, **dadurch gekennzeichnet, dass** der Zwischenboden (6) mit einer Revisionsöffnung (30) versehen ist und dass unterhalb des Wannenbodens (11) ein Blechstück (20) angeschweißt ist, das im Montagezustand in die Revisionsöffnung (30) formschlüssig einfasst.

## Claims

1. An upper strand trough (10) for a trough pan of a scraper chain conveyor, with two side profiles (12) and with a trough bottom (11) which connects these and which has two side edges (14) and two end edges (15, 15') which are formed complementarily to one another, which have at least partially a wavy boundary line and which are provided at the transition of a top side (11'; 111') into the end edge (15, 15'; 115, 115') with a chamfer (16; 116) having a chamfer angle, **characterized in that** the end edges (15, 15'; 115, 115') are provided with a bevel (17; 117) between the chamfer (16, 116) and an underside (18; 118), the bevel (17; 117) sloping more steeply than the chamfer (16; 116).

2. The upper strand trough as claimed in claim 1, **characterized in that** the bevel (17) extends as far as the underside (18) of the trough bottom (11).

3. The upper strand trough as claimed in claim 1, **characterized in that** the bevel (117) extends only partially over the depth of the end edge (115), and a straight edge portion (119) running at right angles to the underside (118) is formed between the underside (118) and the limiting edge of the bevel (117).

4. The upper strand trough as claimed in one of claims 1 to 3, **characterized in that** the chamfer angle is between about 25° and 50° and/or, in particular, amounts to about 30° or 45°, and/or **in that** the bevel angle amounts to about 60° to 80°, in particular about 70°.

5. The upper strand trough as claimed in one of claims 1 to 4, **characterized in that** the bevel (17; 117) and the chamfer (16; 116) at the two opposite end edges (15, 15'; 115, 115') of a trough bottom (11; 111) are of identical size.

6. The upper strand trough as claimed in one of claims 1 to 5, **characterized in that** the boundary line has a central curved zone and is provided at the margin with multiply angled zones.

7. A trough pan for scraper chain conveyors, in particular for longwall conveyors for mining use, with an upper strand trough (10) according to claims 1 to 6, and with a supporting structure for the upper strand trough (10), said supporting structure comprising interconnected side cheeks (4; 5) which delimit a lower strand (3) and are connected via an intermediate bottom (6) which forms a bearing surface for the trough bottom (11) of the upper strand trough (10) and has terminal edges (8) which in the assembled state lie offset to the end edges (15, 15') of the trough bottom (11), in order to provide overlapping regions in the joint region of two adjacent trough pans (1).

8. The trough pan as claimed in claim 7, **characterized in that** the intermediate bottom (6) is provided, near the terminal edges (8; 8') partially with clearances or holes (32).

9. The trough pan as claimed in claim 8, **characterized in that** the intermediate bottom (6) is provided on one side with a flattening (31) reaching as far as the terminal edge (8), the clearances or holes (32) being formed **in that** portion of the intermediate bottom (6) which adjoins the flattening (31).

10. The trough pan as claimed in one of claims 7 to 9, **characterized in that** the number of holes or clearances (32) is greater in the portion than near the other terminal edge (8') of the intermediate bottom (6).

11. The trough pan as claimed in one of claims 7 to 10, **characterized in that** the intermediate bottom (6) is provided with an inspection orifice (30), and **in that**, beneath the trough bottom (11), a sheet metal piece (20) is welded on which in the assembled state fits positively into the inspection orifice (30).

## Revendications

1. Bac de brin supérieur (10) pour un couloir de convoyeur à chaîne à raclettes, comprenant deux profilés latéraux (12) et un fond de bac (11) reliant ceux-ci, qui présente deux bords latéraux (14) et deux bords frontaux (15, 15') qui sont réalisés de manière complémentaire l'un de l'autre, qui présentent au moins en partie une ligne de délimitation ondulée et qui sont pourvus, au niveau de la transition d'un côté de couvercle (11' ; 111') au bord frontal (15, 15' ; 115, 115'), d'un biseautage (16 ; 116) avec un angle de biseau, **caractérisé en ce que** les bords frontaux (15, 15' ; 115, 115') entre le biseautage (16, 116) et un côté inférieur (18 ; 118) sont pourvus d'un chanfrein (17 ; 117), le chanfrein (17 ; 117) s'étendant de manière plus raide que le biseautage (16 ; 116).

2. Bac de brin supérieur selon la revendication 1, **caractérisé en ce que** le chanfrein (17) s'étend jusqu'au côté inférieur (18) du fond du bac (11).

3. Bac de brin supérieur selon la revendication 1, **caractérisé en ce que** le chanfrein (117) ne s'étend que partiellement sur la profondeur du bord frontal (115) et une portion de bord droit (119) s'étendant à angle droit par rapport au côté inférieur (118) est réalisée entre le côté inférieur (118) et le bord limite du chanfrein (117).

4. Bac de brin supérieur selon l'une quelconque des revendications 1 à 3, **caractérisé en ce que** l'angle de biseau est compris entre environ 25° et 50° et/ou vaut notamment environ 30° ou 45° et/ou en ce que l'angle de chanfrein vaut environ 60° à 80°, en particulier environ 70°.

5. Bac de brin supérieur selon l'une quelconque des revendications 1 à 4, **caractérisé en ce que** le chanfrein (17 ; 117) et le biseautage (16 ; 116) au niveau des deux bords frontaux opposés (15, 15' ; 115, 115') d'un fond de bac (11 ; 111) sont de même taille.

6. Bac de brin supérieur selon l'une quelconque des revendications 1 à 5, **caractérisé en ce que** la ligne de délimitation a une zone centrale courbe et est pourvue au niveau du bord de zones coudées plusieurs fois.

7. Couloir de convoyeur à chaîne à raclettes, en particulier pour un convoyeur de taille pour l'industrie minière, comprenant un bac de brin supérieur (10) selon l'une quelconque des revendications 1 à 6 et une construction de support pour le bac de brin supérieur (10), qui comprend des parois latérales (4 ; 5) connectées l'une à l'autre et délimitant un brin inférieur (3), lesquelles sont connectées par le biais d'un fond intermédiaire (6) qui forme une surface d'appui pour le fond du bac (11) du bac de brin supérieur (10) et présente des bords d'extrémité (8) qui sont disposés dans l'état monté de manière décalée par rapport aux bords frontaux (15, 15') du fond du bac (11) afin de créer des régions de chevauchement dans la région d'aboutement de deux couloirs adjacents (1).

8. Couloir selon la revendication 7, **caractérisé en ce que** le fond intermédiaire (6) est pourvu à proximité des bords d'extrémité (8 ; 8') en partie d'évidements ou de trous (32).

9. Couloir selon la revendication 8, **caractérisé en ce que** le fond intermédiaire (6) est pourvu d'un côté d'un méplat (31) s'étendant jusqu'au bord d'extrémité (8), les évidements ou les trous (32) étant réalisés dans la portion partielle du fond intermédiaire (6) se raccordant au méplat (31).

10. Couloir selon l'une quelconque des revendications 7 à 9, **caractérisé en ce que** le nombre des trous ou évidements (32) est plus important dans la portion partielle qu'à proximité de l'autre bord d'extrémité (8') du fond intermédiaire (6).

11. Couloir selon l'une quelconque des revendications 7 à 10, **caractérisé en ce que** le fond intermédiaire (6) est pourvu d'une ouverture d'inspection (30) et **en ce qu'**en dessous du fond du bac (11) est soudée une pièce en tôle (20) qui, dans l'état monté, s'insère par engagement positif dans l'ouverture d'inspection (30).
